# EUROPEAN PATENT APPLICATION

(11) **EP 2 190 093 A2**
(43) Date of publication of application: **26.05.2010**
(21) Application number: 09173610.8
(22) Date of filing: 21.10.2009
(51) Int. Cl.: H02H 1/00, H02H 3/33, H02H 7/30

(54) **Apparatus and method for controlling a residual current circuit breaker**

(30) Priority: 20.11.2008 CN 200810176738
(71) Applicant: SIEMENS AKTIENGESELLSCHAFT, 80333 München (DE)
(72) Inventor: Bao, Zhang Yao, 201514, Shanghai (CN); Wang, Xiao Dong, 201514, Shanghai (CN); Xiong, Tao, 201612, Shanghai (CN)

(57) **Abstract**

The present invention provides an apparatus for controlling a residual current circuit breaker, comprising: an amplifying unit for receiving a detected electrical leakage sampling signal, and outputting a first output signal after having amplified said electrical leakage sampling signal; a delay unit for outputting a second output signal in the case of receiving said first output signal, wherein, after a period of inverse time-lag initiated from the receipt of said first output signal, said second output signal reaches a first predetermined value; a triggering unit for outputting a triggering signal in the case that said second output signal reaches the first predetermined value, so as to trigger the action of an actuating mechanism in said residual current circuit breaker. The present invention further provides a method for the control of the residual current circuit breaker.

## Description

The present invention relates to an apparatus and a method for controlling a residual current circuit breaker.

A residual current circuit breaker is used to control an actuating device to cut off a circuit or send out an alarm signal when an electrical leakage current (or referred to as a residual current) is detected in a line.

The residual current circuit breaker commonly utilizes a detecting device (for example, a zero-sequence current transformer, ZCT) to detect and obtain an electrical leakage sampling signal. Then, a control apparatus amplifies the electrical leakage sampling signal and compares the amplified sampling signal with a reference signal, and when the amplified sampling signal reaches the level of the reference signal, the control apparatus outputs a triggering signal for triggering the action of an actuating mechanism (for example, a tripping device). In the prior art, the abovementioned functions of the control apparatus, such as amplification and comparison of the sampling signal with the output of the triggering signal, may be realized by employing an integrated circuit (for example, a chip M54123).

The residual current circuit breaker using the above-mentioned control apparatus will generate the above-mentioned control signal in the case that an electrical leakage current occurs, so as to trigger the action of the actuating mechanism. However, in some application situations, for example in the case of using a multi-stage electrical leakage switch protection, when the leakage current appears at a lower stage electrical leakage switch, it will cause the simultaneous action of the upper stage and lower stage electrical leakage switches, thus leading to the power failure of the entire system. In order to avoid the occurrence of such a case, it is necessary for the upper stage electrical leakage switch to have an inverse time action property, to perform a selective protection in the event of the leakage current in the lower stage electrical leakage switch, thereby preventing the power failure of the entire system.

In the National Standard (GB16917), the range of time delay adopted in a residual current circuit breaker when an electrical leakage current occurs has been specifically provided, wherein, when the electrical leakage current is less than five times the nominal leakage action current, the delay time is inversely proportional to the magnitude of the leakage current, namely: the greater the electrical leakage current, the shorter the delay time of the residual current circuit breaker; and the smaller the electrical leakage current, the longer the delay time of the residual current circuit breaker. That is to say, the electrical leakage current and the delay time of the residual current circuit breaker exhibits an inverse time characteristic. When the leakage current is greater than five times the nominal leakage action current, it is necessary for the action time to meet the minimal non-driven time of 40 ms and the maximal action time of 150 ms, as provided in the National Standard (GB16917).

The present invention provides an apparatus for controlling a residual current circuit breaker, and when an electrical leakage current is detected, said control apparatus can make the residual current circuit breaker trigger the action of an actuating mechanism only after a corresponding time delay according to the magnitude of the detected electrical leakage current. The present invention further provides a corresponding method for controlling the residual current circuit breaker.

The apparatus for controlling a residual current circuit breaker provided by the present invention comprises: an amplifying unit for receiving a detected electrical leakage sampling signal, and outputting a first output signal after having amplified said electrical leakage sampling signal; a delay unit, an input terminal of which is connected to the output terminal of said amplifying unit, said delay unit outputting a second output signal in the case of receiving said first output signal, wherein after a period of inverse time-lag started from the receipt of said first output signal, said second output signal reaches a first predetermined value; a triggering unit, an input terminal of which is connected to the output terminal of said delay unit, wherein said triggering unit outputs, in the case that said second output signal reaches the first predetermined value, a triggering signal for triggering the action of an actuating mechanism in said residual current circuit breaker.

As a particular embodiment, said delay unit comprises a charge-discharge circuit, an input terminal of which is connected to the output terminal of said amplifying unit, and said charge-discharge circuit charges and outputs the second output signal when receiving said first output signal, wherein, after a period of inverse time-lag started from the receipt of said first output signal, said second output signal reaches the first predetermined value, and said inverse time-lag is determined by the charging time of said charge-discharge circuit. Preferably, said charge-discharge circuit discharges when said first output signal disappears.

As another particular embodiment, said delay unit comprises: a signal amplifying circuit, an input terminal of which is connected to the output terminal of said amplifying unit, for amplifying said first output signal and then outputting a first intermediate signal; a charge-discharge circuit, an input terminal of which is connected to the output terminal of said signal amplifying circuit, and said charge-discharge circuit charges when receiving said first intermediate signal and outputs the second output signal, wherein, after a period of inverse time-lag started from the receipt of said first output signal, said second output signal reaches the first predetermined value, and said inverse time-lag is determined by the charging time of said charge-discharge circuit. Preferably, said charge-discharge circuit discharges when said first intermediate signal disappears.

Particularly, said charge-discharge circuit is realized by an RC charge-discharge circuit composed of a resistor and a capacitor.

As a particular embodiment, said amplifying unit and said triggering unit are realized by an integrated circuit used for electrical leakage protection.

Preferably, the range of said inverse time-lag is 40 ms to 500 ms.

The method for controlling a residual current circuit breaker provided by the present invention comprises the following steps: receiving by an amplifying unit a detected electrical leakage sampling signal, and outputting a first output signal after having amplified said electrical leakage sampling signal; outputting by a delay unit a second output signal after having received said first output signal, wherein, after a period of inverse time-lag started from the receipt of said first output signal, said second output signal reaches a first predetermined value; receiving by a triggering unit said second output signal and outputting, in the case that said second output signal reaches the first predetermined value, a triggering signal for triggering the action of an actuating mechanism in said residual current circuit breaker.

Particularly, said inverse time-lag is determined by the charging time of a charge-discharge circuit.

Preferably, the range of said inverse time-lag is 40 ms to 500 ms.

Another apparatus for controlling the residual current circuit breaker provided by the present invention comprises: a preset delay module, which comprises an initiating unit, when the detected electrical leakage sampling signal received by said preset delay module is greater than or equal to a predetermined value of said initiating unit, after a period of predetermined time delay, said preset delay module outputting a triggering signal for triggering the action of an actuating mechanism in said residual current circuit breaker; and an inverse time-lag module, when the detected electrical leakage sampling signal received by said preset delay module is less than said predetermined value of said initiating unit, after a period of inverse time-lag started from the receipt of the detected electrical leakage sampling signal, said inverse time-lag module outputting a triggering signal for triggering the action of an actuating mechanism in said residual current circuit breaker.

As a particular embodiment, said inverse time-lag module comprises: an amplifying unit for receiving a detected electrical leakage sampling signal, and outputting a first output signal after having amplified said electrical leakage sampling signal; a delay unit, an input terminal of which is connected to the output terminal of said amplifying unit, said delay unit outputting a second output signal in the case receiving said first output signal, wherein, after a period of inverse time-lag started from the receipt of said first output signal, said second output signal reaches a first predetermined value; and a triggering unit, an input terminal of which is connected to the output terminal of said delay unit, said triggering unit outputting, in the case that said second output signal reaches the first predetermined value, said trigger signal for triggering the action of an actuating mechanism in said residual current circuit breaker.

As a particular embodiment, said preset delay module further comprises: an amplifying unit for receiving a detected electrical leakage sampling signal, and outputting a third output signal after having amplified said electrical leakage sampling signal; a delay unit, an input terminal of which is connected to the output terminal of said amplifying unit, said delay unit outputting a fourth output signal in the case of receiving said third output signal, wherein, after a predetermined time delay started from the receipt of said third output signal, said fourth output signal reaches a second predetermined value; a judging unit, which comprises two input terminals, wherein one input terminal is connected to the output terminal of said amplifying unit, and the other input terminal is connected to the output terminal of said delay unit, and when said judging unit receives the third output signal and the fourth output signal received by said judging unit reaches the second predetermined value, said judging unit outputs a fifth output signal which reaches the first predetermined value; and a triggering unit, an input terminal of which is connected to the output terminal of said judging unit, said triggering unit outputting, in the case of receiving said fifth output signal which reaches the first predetermined value, said triggering signal for triggering the action of an actuating mechanism in said residual current circuit breaker.

As a particular embodiment, said delay unit comprises: a first stage charge-discharge circuit, an input terminal of which is connected to the output terminal of said amplifying unit, and said first stage charge-discharge circuit completes its charging when receiving said third output signal and outputs a second intermediate signal, and discharges when the third output signal disappears and outputs the second intermediate signal until the discharging is completed; a signal amplifying circuit, an input terminal of which is connected to the output terminal of said first stage charge-discharge circuit, for amplifying said received second intermediate signal and then outputting a third intermediate signal; and a second stage charge-discharge circuit, an input terminal of which is connected to the output terminal of said signal amplifying circuit, and said second stage charge-discharge circuit charges when receiving said third intermediate signal and outputs a fourth output signal, wherein, after a predetermined time delay started from the receipt of said third output signal, said fourth output signal reaches the second predetermined value, and said predetermined time delay is determined by the charging time of said second stage charge-discharge circuit. Preferably, said second stage charge-discharge circuit discharges when said third intermediate signal disappears.

Particularly, said initiating unit is said amplifying unit, and the predetermined value of said initiating unit is a gate valve voltage of said amplifying unit.

Particularly, said first stage charge-discharge circuit and said second stage charge-discharge circuit are each realized by an RC charge-discharge circuit composed of a resistor and a capacitor.

Particularly, said judging unit is realized by an AND gate circuit.

As a particular embodiment, said amplifying unit and said triggering unit are realized by an integrated circuit which is used for the electrical leakage protection.

Preferably, the range of said inverse time-lag is 40 ms to 500 ms.

Another method for controlling the residual current circuit breaker provided by the present invention comprises the following steps: outputting by an inverse time-lag module a triggering signal for triggering the action of an actuating mechanism in said residual current circuit breaker when a detected electrical leakage sampling signal received by a preset delay module is less than a predetermined value of an initiating unit in the preset delay module, and after a period of inverse time-lag started from the receipt of the detected electrical leakage sampling signal; and outputting by said preset delay module a triggering signal for triggering the action of the actuating mechanism in said residual current circuit breaker when the detected electrical leakage sampling signal received by said preset delay module is greater than or equal to the predetermined value of the initiating unit, and after a period of predetermined time delay started from the receipt of the detected electrical leakage sampling signal.

Particularly, said predetermined time delay is determined by the charging time of a charge-discharge circuit.

Preferably, the range of said inverse time-lag is 40 ms to 500 ms.

The apparatus for controlling a residual current circuit breaker in the present invention utilizes a delay unit, so that a triggering signal is sent only after having detected an electrical leakage sampling signal and after a period of time delay. The delay time is inversely proportional to the magnitude of the electrical leakage current. In this way, it can avoid a skip action generated in the event of the occurrence of a leakage current, so as to make the residual current circuit breaker have a selective protection. Said delay unit can be realized simply by a charge-discharge circuit. The technical solution of the present invention can be conveniently realized based on the control apparatus of the existing residual current circuit breakers (for example the control apparatus realized on the basis of an integrated circuit chip M54123), and therefore it can shorten the R&D cycle and save the costs thereof.

In an embodiment of the control apparatus of the present invention, the delay unit is further provided with the stage of a charge-discharge circuit that can be charged rapidly, and when the electrical leakage current is less than a cut-off value, the time for triggering a tripping mechanism of the control apparatus is inversely proportional to the magnitude of the electrical leakage current. When the electrical leakage current is greater than the cut off value, the time of triggering the tripping mechanism of the control apparatus is controlled quite definitely within a predetermined time range. At the same time, a judging unit composed of an AND gate circuit is also provided in this control apparatus, and only in the case of the signal outputted by the delay circuit reaching the second predetermined value and at the same time the amplifying unit still having the output signal, the judging unit outputs a signal that can make the triggering unit send out a triggering signal, so that the residual current circuit breaker have a selective protection.

The control apparatus of the present invention can set different time delay ranges according to the requirements by practical applications. Preferably, in the case of setting the inverse time-lag within a range from 50 ms to 500 ms, setting the predetermined time delay within a range from 40 ms to 150 ms, the control apparatus of the present invention can avoid the skip action generated in the event of the occurrence of a leakage current, so that the residual current circuit breaker has a selective protection.

### Description of the accompanying drawings

Fig. 1 is a schematic construction diagram of an apparatus for controlling a residual current circuit breaker according to embodiment one of the present invention;
Fig. 2 is a schematic circuit structure diagram of an apparatus for controlling the residual current circuit breaker according to embodiment two of the present invention;
Fig. 3 is a schematic construction diagram of a delay unit according to embodiment two of the present invention;
Fig. 4 is a schematic construction diagram of an apparatus for controlling the residual current circuit breaker according to embodiment three of the present invention;
Fig. 5 is a schematic construction diagram of a preset delay module according to embodiment three of the present invention;
Fig. 6 is a schematic circuit structure diagram of an apparatus for controlling the residual current circuit breaker according to embodiment four of the present invention;

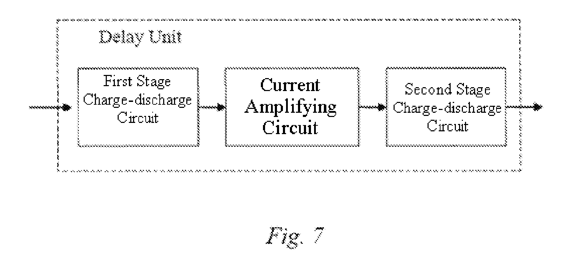

Fig. 7 is a schematic construction diagram of a delay unit according to embodiment four of the present invention.

Hereinbelow, the present invention will be explained in detail in conjunction with the drawings.

In order to make a residual current circuit breaker trigger the action of an actuating mechanism only after having detected an electrical leakage current and after a certain time delay, the basic idea of the present invention is to set a delay unit in a control apparatus of the residual current circuit breaker. Several particular implementations are described below.

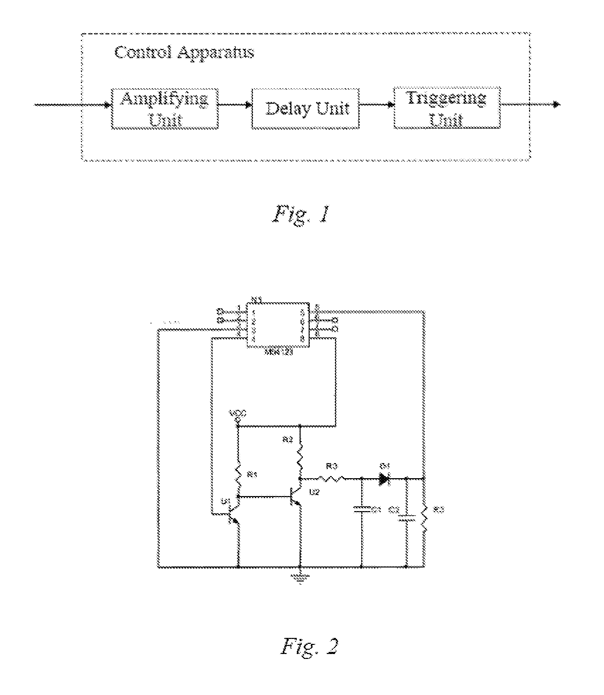

Fig. 1 shows a schematic construction diagram of an apparatus for controlling a residual current circuit breaker of the present invention. The control apparatus comprises an amplifying unit, a delay unit and a triggering unit.

The amplifying unit is used to receive an electrical leakage sampling signal from a detecting device of the residual current circuit breaker, and to output the amplified electrical leakage sampling signal as a first output signal to the delay unit after having the electrical leakage sampling signal amplified.

The input terminal of the delay unit is connected to the output terminal of said amplifying unit. The delay unit outputs a second output signal in the case of receiving said first output signal, wherein, only after a period of inverse time-lag started from the receipt of said first output signal, the second output signal reaches a first predetermined value.

Particularly, the delay unit can be realized in particular by employing a charge-discharge circuit. When the charge-discharge circuit receives said first output signal, it charges and outputs a second output signal to the triggering unit. Since the charging process of the charge-discharge circuit can be completed only after a period of inverse time-lag, the second output signal reaches the first predetermined value after a period of inverse time-lag determined by the charging time of the charge-discharge circuit started from the receipt of the first output signal. Preferably, the charge-discharge circuit discharges when the first output signal disappears.

The input terminal of the triggering unit is connected to the output terminal of the delay unit. The triggering unit compares the second output signal from the delay unit with the first predetermined value. The triggering unit outputs, in the case of the second output signal reaching the first predetermined value, a triggering signal (for example, a high level signal) for triggering the action of an actuating mechanism in the residual current circuit-breaker, for example triggering a tripping device to perform a tripping operation. While in the case of the second output signal from the delay unit being less than the first predetermined value, the triggering unit outputs a normal signal (for example, a low level signal), which will not trigger the action of the actuating mechanism.

In this embodiment, the control steps of the apparatus for controlling the residual current circuit breaker comprise the following:
1. The amplifying unit receives the detected electrical leakage sampling signal, and outputs the first output signal after having said electrical leakage sampling signal amplified.
2. The delay unit outputs the second output signal after having received the first output signal, wherein, after a period of inverse time-lag started from the receipt of the first output signal, the second output signal reaches the first predetermined value. In particular, said inverse time-lag is determined by the charging time of a charge-discharge circuit.
3. The triggering unit receives the second output signal and compares the second output signal with a first predetermined value, and outputs, in the case of said second output signal reaching the first predetermined value, a trigger signal for triggering the action of the actuating mechanism in the residual current circuit breaker.

Embodiment two is an example of a particular circuit implementation based on embodiment one. Fig. 2 is a schematic circuit structure diagram of embodiment two.

In this embodiment, a zero-sequence current transformer (ZCT) is employed in the detecting device of the residual current circuit breaker. The electrical leakage sampling signal detected by the zero-sequence current transformer is outputted to the detecting device of the residual current circuit breaker.

In this embodiment, the amplifying unit and triggering unit of the detecting device are mainly realized by an integrated circuit chip M54123. In chip M54123, the amplifying unit is particularly implemented as a differential amplifier, and the triggering unit is particularly implemented as a latch circuit. Chip M54123 has 8 pins, wherein, pins 1 and 2 are input terminals of the differential amplifier; pin 3 is a ground terminal; pin 4 is an output terminal of the differential amplifier; pin 5 is an input terminal of the latch circuit (or called a latch-storing circuit); pin 6 is a noise suppression terminal; pin 7 is an output terminal of the latch circuit; and pin 8 is a power supply terminal.

After the differential amplifier has received an electrical leakage sampling signal from the zero-sequence current transformer from the pins 1 and 2 of M54123, it amplifies the electrical leakage sampling signal, and then outputs the first output signal via pin 4 of M54123.

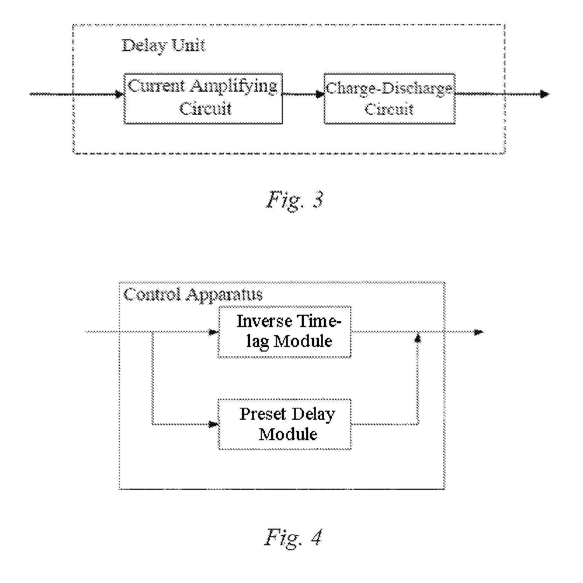

In this embodiment, the delay unit is particularly implemented as including a signal amplifying circuit and a charge-discharge circuit, as shown in Fig. 3.

The input terminal of the signal amplifying circuit is connected to the output terminal of the amplifying unit, for amplifying the first output signal from the amplifying unit, and then outputs a first intermediate signal to the charge-discharge circuit. In this example, the signal amplifying circuit is composed of a two-stage triode amplifier (namely, a triode U1 and its emitter resistor R1, and a triode U2 and its emitter resistor R2), and the signals from the pin 4 of M54123 are inputted via the base electrode of the triode U1, and are outputted as the first intermediate signal from the collector of the triode U2 after having been amplified by the triode U1 and the triode U2.

In this example, the charge-discharge circuit is an RC charge-discharge circuit composed of a capacitor C1 and its resistor R2 and resistor R3. When the triode U2 outputs the first intermediate signal, the capacitor C1 starts to be charged via the resistor R2 and resistor R3. Since the charging process needs to take a certain amount of time, the level of signal (namely, the second output signal outputted by the delay unit to the triggering unit), which is outputted by the RC charge-discharge circuit to pin 5 of M54123, increases gradually during the whole charging process, and can reach the first predetermined value only after the charging of the capacitor C1 is completed.

Pin 5 of M54123 receives the second output signal, and the latch circuit performs a comparison operation. If the level of the second output signal which is outputted by the RC charge-discharge circuit to pin 5 of M54123 is less than the first predetermined value, then the output terminal (namely, pin 7 of M54123) of the latch circuit will output a low level signal; if the level of the second output signal which is outputted by the RC charge-discharge circuit to pin 5 of M54123 reaches the first predetermined value, then the output terminal (namely, pin 7 of M54123) of the latch circuit will output a high level signal.

This high level signal can trigger a thyristor switch element (not shown in the figure) connected to the output terminal of the latch circuit, so as to charge a tripping coil (not shown in the figure), and in turn to cause a tripping device (not shown in the figure) to perform a tripping action.

If the signal from pin 4 of M54123 disappears, then there is no signal outputted from the signal amplifying circuit. At this time, the capacitor C1 will discharge via the triode U2 connected in parallel to it. In this way, if an interference leakage signal is received again after a period of time, the tripping action will not be triggered immediately.

In this embodiment, the effect of the signal amplifying circuit is to amplify the signal from pin 4 of M54123, so as to provide a signal sufficient to drive the operation of subsequent circuits. If the signal from pin 4 of M54123 is large enough, then there is no need to set the signal amplifying circuit.

In the above embodiments, by setting the charge-discharge circuits and determining the time constants of the charge-discharge circuits, the amounts of time involved in completing the charge of the charge-discharge circuits can be preset, and the time delay of the delay unit of the control apparatus is set correspondingly. Particularly for embodiment two, the time delay is determined by the time constant (namely, the product of resistance value of the resistor and the capacitance value of the capacitor in the RC charge-discharge circuit) of the RC charge-discharge circuit.

For example, in order to avoid a skip action generated during arising of leakage current, so as to have a selective protection, generally it is required for the control apparatus of the residual current circuit breaker to have a delay time within a range from 40 ms to 500 ms. In this case, the time constant of the charge-discharge circuit can be set correspondingly, so as to make the charging time of the charge-discharge circuit within the range from 40 ms to 500 ms, namely it is preferable to set the inverse time-lag of the delay unit in the control apparatus within the range from 40 ms to 500 ms.

Fig. 4 gives a schematic construction diagram of another apparatus for controlling the residual current circuit breaker of the present invention.

The control apparatus comprises a preset delay module and an inverse time-lag module.

The preset delay module comprises an initiating unit, and when the detected electrical leakage sampling signal received by the preset delay module is greater than or equal to a predetermined value of the initiating unit, after a period of predetermined delay time, the preset delay module outputs a triggering signal for triggering the action of an actuating mechanism in the residual current circuit breaker.

When the detected electrical leakage sampling signal received by said preset delay module is less than the predetermined value of the initiating unit, after a period of inverse time-lag started from the receipt of the detected electrical leakage sampling signal, the inverse time-lag module outputs a triggering signal for triggering the action of an actuating mechanism in the residual current circuit breaker.

In this case, the inverse time-lag module comprises an amplifying unit, a delay unit and a triggering unit. The function and connection relationship of each unit have been illustrated in embodiment one, and will not be described redundantly.

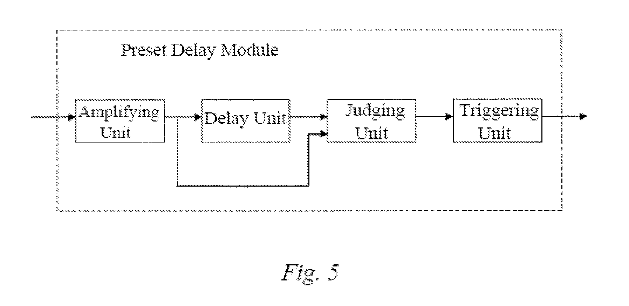

Fig. 5 is a schematic construction diagram of a preset delay module of embodiment three of the present invention. The preset delay module comprises an initiating unit, an amplifying unit, a delay unit, a judging unit and a triggering unit.

Normally, the initiating unit and amplifying unit are combined together, and the predetermined value of the initiating unit is the initiating value of the amplifying unit.

The initiating unit is used to receive the detected electrical leakage sampling signal, and when the detected electrical leakage sampling signal received by the initiating unit is less than the predetermined value of the initiating unit, the preset delay module will not work, and only the inverse time-lag module works. When the detected electrical leakage sampling signal received by the initiating unit is greater than or equal to the predetermined value of the initiating unit, the preset delay module starts to work (at this time, the inverse time-lag module also works). Normally, the initiating unit is an amplifying circuit for amplifying the detected electrical leakage sampling signal received by it and outputting to the subsequent amplifying unit.

The amplifying unit is used to receive an electrical leakage sampling signal from a detecting device of the residual current circuit breaker, and after having amplified the electrical leakage sampling signal, output it as a third output signal to the delay unit.

The input terminal of the delay unit is connected to the output terminal of said amplifying unit. The delay unit outputs a fourth output signal in the case of receiving said third output signal, wherein, only after a period of predetermined time delay started from the receipt of said third output signal, the fourth output signal reaches a second predetermined value.

Preferably, the delay unit in this example is realized by using two stages of charge-discharge circuits, wherein, the first stage charge-discharge circuit is a fast charge-discharge circuit. When the first charge-discharge circuit receives the third outputing signal, it can charge rapidly, further making the second stage charge-discharge circuit charge and outputting a fourth output signal. When the third output signal disappears, the first stage charge-discharge circuit discharges, and this makes the second stage charge-discharge circuit still charge within a period of time. In this case, only after the charge of the second stage charge-discharge circuit is completed for a predetermined time delay, will the fourth output signal reach the second predetermined value.

The judging unit comprises two input terminals, wherein one input terminal is used to receive the third output signal from the amplifying unit, and the other input terminal is used to receive the fourth output signal from the delay unit. When the judging unit receives the third output signal and the fourth output signal received by the judging unit reaches the second predetermined value, the judging unit outputs a fifth output signal which reaches the first predetermined value.

Particularly, the judging unit can be realized by an AND gate circuit.

The input terminal of the triggering unit is connected to the output terminal of the judging unit. In the case of receiving the fifth output signal which reaches the first predetermined value, the triggering unit outputs a triggering signal (for example, a high level signal) for triggering the action of the actuating mechanism in the residual current circuit-breaker, for example triggering the tripping device to perform a tripping operation. But in the case of the received fifth output signal being less than the first predetermined value, the triggering unit outputs a normal signal (for example, a low level signal), which will not trigger the action of the actuating mechanism.

In fact, when the detected electrical leakage sampling signal received by the preset delay module is greater than or equal to the predetermined value of the initiating unit, the inverse time-lag module also works, however since the delay time of the preset delay module is short, normally less than 150 ms, the triggering unit of the preset delay module will output a triggering signal prior to the one outputted by the triggering unit of the inverse time-lag module, so as to trigger the action of the actuating mechanism in the residual current circuit-breaker.

In this embodiment, the control steps of the apparatus for controlling the residual current circuit breaker comprise:
1. when the detected electrical leakage sampled signal received by the preset delay module is less than a predetermined value of the initiating unit in the preset delay module, after a period of inverse time-lag started from the receipt of the detected electrical leakage sampling signal, the inverse time-lag module outputs a triggering signal for triggering the action of the actuating mechanism in the residual current circuit-breaker; and
2. when the detected electrical leakage sampling signal received by said preset delay module is greater than or equal to the predetermined value of said initiating unit, after a period of predetermined time delay started from the receipt of the detected electrical leakage sampling signal, said preset delay module outputs a triggering signal for triggering the action of the actuating mechanism in said residual current circuit breaker.

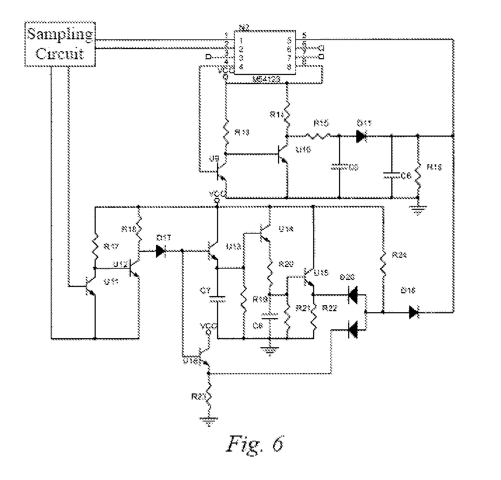

Embodiment four is an example of a particular circuit implementation based on embodiment three. Fig. 6 is a schematic circuit structure diagram of embodiment four. In this example, the amplifying unit and triggering unit in the inverse time-lag module of the control apparatus are still realized by an integrated circuit chip M54123, as described in embodiment two, and its operation process will not be described herein redundantly.

The initiating unit and amplifying unit in the preset delay module of the control apparatus are combined into one unit, namely an amplifying circuit composed of a triode U11, a resistor R17, a triode U12 and a resistor R18 , and this time the initiating value of the initiating unit is a driving voltage of the triode U11. After the electrical leakage current flows through the sampling circuit located in front of the control apparatus, it is converted into a voltage signal by resistance-matching. If the voltage signal is less than the driving voltage (0.7 V) of the triode U11, then the preset delay module is not initiated, and at this time only the inverse time-lag module located above it works. When the output terminal (namely pin 7 of M54123) of the triggering unit of the inverse time-lag module outputs a high level signal, the high level signal can trigger a thyristor switch element (not shown in the figure) connected to the output terminal of the latch circuit, so as to charge a tripping coil (not shown in the figure), and in turn cause a tripping device (not shown in the figure) to perform a tripping action.

If the received electrical leakage sampling signal is greater than or equal to the driving voltage (0.7 V) of the triode U11, then the preset delay module is initiated. At this time, both the preset delay module and the inverse time-lag module above it start working.

The amplifying unit and initiating unit of the preset delay module are the same one, namely they are an amplifying circuit composed of a triode U11, a resistor R17, a triode U12 and a resistor R18, for amplifying the detected electrical leakage sampling signal received, and outputting the third output signal. The third output signal is a voltage reduced via a diode D17.

The delay unit of the preset delay module comprises a first stage charge-discharge circuit composed of a triode U13, a capacitor C7 and a resistor R19 parallel to it; a signal amplifying circuit composed of a triode U14; a second stage charge-discharge circuit composed of a capacitor C8 and a series resistor R20, a resistor R21 parallel to it; and a signal amplifying circuit composed of a triode U15.

The input terminal of the first stage charge-discharge circuit is connected to the output terminal of the amplifying unit. The capacitor C7 of the first stage charge-discharge circuit A has a small capacitance, and after the triode U13 has received the third output signal from the amplifying unit, the signal outputted by its emitter causes the charging of the capacitor C7 connected in series with its emitter to complete instantaneously, and outputs a second intermediate signal. Then, after the signal amplifying circuit composed of triode U14 has amplified the second intermediate signal from the first stage charge-discharge circuit, a third intermediate signal is outputted, so as to perform the charging on the capacitor C8 via the resistor R20 of the second stage charge-discharge circuit, and at the same time the second stage charge-discharge circuit outputs the fourth output signal. Since the second stage charge-discharge circuit takes a predetermined time delay to complete the charging process, the fourth output signal reaches the second predetermined value only after a predetermined time delay determined by the charging time of the second stage charge-discharge circuit initiated from the receipt of the third output signal by the delay unit. When the third output signal disappears, the first stage charge-discharge circuit performs discharging, and outputs the second intermediate signal until completing the discharging, and this makes it possible for the second stage charge-discharge circuit to charge within a period of time. The second stage charge-discharge circuit discharges when said third intermediate signal disappears.

The abovementioned fourth output signal is further sent to the judging unit. The judging unit is realized by an AND gate circuit. In this embodiment, the AND gate circuit comprises a diode D20, a resistor R22, a diode D21 and a resistor R23. In this case, the negative pole of the diode D21 is connected to the emitter of triode U16, for receiving the third output signal from the amplifying unit, and the negative pole of the diode D20 is connected to the output terminal of the second stage charge-discharge circuit in the delay unit, for receiving the fourth output signal from the delay unit. When the negative pole of the diode D21 receives the third output signal from the amplifying unit and the fourth output signal from the output terminal of the second stage charge-discharge circuit received by the negative pole of the diode D20 reaches the second predetermined value (namely, this is equivalent to two input terminals of the AND gate ciruit both receiving the high level signal), the AND gate circuit outputs a fifth output signal which reaches the first predetermined value to the input terminal (namely, pin 5 of M54123) of the triggering unit (namely, this is equivalent to the AND gate circuit outputting a high level signal). In order to avoid the interfering signals in the inverse time-lag module affecting the preset delay module, the fifth output signal is connected to the input terminal (namely, pin 5 of M54123 ) of the triggering unit via a diode D16 having a reverse cut-off function.

In this example, the first stage charge-discharge circuit which is rapidly chargeable is set in the delay unit of the delay module, and the charging of the first stage charge-discharge circuit can complete instantaneously when the first output signal is received, in turn this causing the second stage charge-discharge circuit to charge. While, when the first output signal disappears, the first stage charge-discharge circuit discharges and outputs the second intermediate signal until the completion of the discharging, and this causes the second stage charge-discharge circuit still to charge within a period of time. In this way, even in the case of a relatively large fluctuation occurring in the first output signal (for example, signal distortion or interruption), the delay circuit can still quite definitely control the time for triggering the tripping mechanism of the control apparatus within a predetermined range (for example from 50 ms to 150 ms). At the same time, a judging unit composed of an AND gate circuit is also provided in the control apparatus, and only in the case of the second output signal reaching the second predetermined value and at the same time the first output signal is still present, does the judging unit send out a third output signal which reaches the first predetermined value to the triggering unit, and in this way it can better avoid the skip action generated in the event of arising leakage current, so that the residual current circuit breaker has selective protection.

Since the control apparatus in embodiment three and embodiment four can perform a corresponding time delay according to the magnitude of the detected electrical leakage sampling signal received, when the electrical leakage sampling signal is relatively small (less than the initiating value of the preset delay module), the preset delay module does not work, and only the inverse time-lag module works. The delay time through the inverse time-lag module is in a trend inversely proportional to the electrical leakage sampling signal.

When the electrical leakage sampling signal is relatively large (greater than or equal to the initiating value of the preset delay module), the preset delay module works, and the inverse time-lag module also works. Since the delay time of the preset delay module is less than the delay time of the inverse time-lag module, the action of tripping mechanism of the residual current circuit breaker is triggered by the output of the preset delay module. The use of the preset delay module in embodiment three and embodiment four also means that when a leakage current signal occurs, the residual current circuit breaker does not act immediately, but after a period of predetermined time delay, the tripping mechanism of the residual current circuit breaker is triggered to act only when a second leakage current signal occurs (namely, the leakage current signals occur continuously). Thus, this can avoid the skip action generated in the event of arising leakage current, so that the residual current circuit breaker has selective protection.

Although the above embodiments of the present invention set forth the exemplary particular circuit implementations, however, those skilled in the art can understand that the function units that are needed to realize the present invention can also employ any other particular circuit implementations, for example, chip M54123 in the above embodiments may be replaced by other integrated circuit chips used for leakage current protection, such as M54123L, VG54123, M54122L, M54133FP, IL7101, GL7101, etc. Furthermore, other electronic components can also be used to realize the circuits in the embodiments of the present invention, for example, the relevant functions of the embodiments of the present invention can also be realized by using NPN triodes or field effect transistors. In addition, the control apparatus of the present invention, particularly the delay unit and the judging unit, can be realized both by using discrete electronic components and by using integrated circuits.

Therefore, the above embodiments are merely the preferable embodiments of the present invention, and they are not to limit the scope of protection of the present invention. Any modification, equivalent substitution and improvement within the spirit and principle of the present invention are to be covered in the scope of protection of the present invention.

## Claims

1. An apparatus for controlling a residual current circuit breaker, comprising:
an amplifying unit for receiving a detected electrical leakage sampling signal, and outputting a first output signal after having amplified said electrical leakage sampling signal;
**characterized in that** said control apparatus further comprises:
a delay unit, an input terminal of which is connected to an output terminal of said amplifying unit, said delay unit outputting a second output signal in the case of receiving said first output signal, wherein after a period of inverse time-lag started from the receipt of said first output signal, said second output signal reaches a first predetermined value; and
a triggering unit, an input terminal of which is connected to an output terminal of said delay unit, said triggering unit outputting a triggering signal in the case that said second output signal reaches the first predetermined value, so as to trigger the action of an actuating mechanism in said residual current circuit breaker.

2. The control apparatus as claimed in claim 1, **characterized in that** said delay unit comprises a charge-discharge circuit, an input terminal of which is connected to the output terminal of said amplifying unit, and said charge-discharge circuit charges and outputs the second output signal when receiving said first output signal, wherein, after a period of inverse time-lag started from the receipt of said first output signal, said second output signal reaches the first predetermined value, and said inverse time-lag is determined by the charging time of said charge-discharge circuit.

3. The control apparatus as claimed in claim 2, **characterized in that** said charge-discharge circuit discharges when said first output signal disappears.

4. The control apparatus as claimed in claim 1, **characterized in that** said delay unit comprises:
a signal amplifying circuit, an input terminal of which is connected to the output terminal of said amplifying unit, for amplifying said first output signal and then outputting a first intermediate signal; and
a charge-discharge circuit, an input terminal of which is connected to the output terminal of said signal amplifying circuit, and said charge-discharge circuit charges when receiving said first intermediate signal and outputs the second output signal, wherein, after a period of inverse time-lag started from the receipt of said first output signal, said second output signal reaches the first predetermined value, and said inverse time-lag is determined by the charging time of said charge-discharge circuit.

5. The control apparatus as claimed in claim 4, **characterized in that** said charge-discharge circuit discharges when said first intermediate signal disappears.

6. A method for controlling a residual current circuit breaker, comprising the following steps:
receiving by an amplifying unit a detected electrical leakage sampling signal, and outputting a first output signal after having amplified said electrical leakage sampling signal;
**characterized by**
outputting by a delay unit a second output signal after having received said first output signal, wherein, after a period of inverse time-lag started from the receipt of said first output signal, said second output signal reaches a first predetermined value; and
receiving by a triggering unit said second output signal and outputting, in the case that said second output signal reaches the first predetermined value, a triggering signal for triggering the action of an actuating mechanism in said residual current circuit breaker.

7. The control method as claimed in claim 6, **characterized in that** said inverse time-lag is determined by the charging time of a charge-discharge circuit.

8. An apparatus for controlling the residual current circuit breaker, **characterized in that** said control apparatus comprises:
a preset delay module, said preset delay module comprising an initiating unit, when a detected electrical leakage sampling signal received by said preset delay module is greater than or equal to a predetermined value of said initiating unit, after a period of predetermined time delay, said preset delay module outputs a triggering signal for triggering the action of an actuating mechanism in said residual current circuit breaker; and
an inverse time-lag module, and when the detected electrical leakage sampling signal received by said preset delay module is less than the predetermined value of said initiating unit, after a period of inverse time-lag started from the receipt of the detected electrical leakage sampling signal, said inverse time-lag module outputs a triggering signal for triggering the action of an actuating mechanism in said residual current circuit breaker.

9. The control apparatus as claimed in claim 8, **characterized in that** said inverse time-lag module comprises:
an amplifying unit for receiving the detected electrical leakage sampling signal, and outputting a first output signal after having amplified said electrical leakage sampling signal;
a delay unit, an input terminal of which is connected to an output terminal of said amplifying unit, and said delay unit outputs a second output signal in the case of receiving said first output signal, wherein, after a period of inverse time-lag started from the receipt of said first output signal, said second output signal reaches a first predetermined value; and
a triggering unit, an input terminal of which is connected to the output terminal of said delay unit, in the case that said second output signal reaches the first predetermined value, said triggering unit outputs said trigger signal for triggering the action of the actuating mechanism in said residual current circuit-breaker.

10. The control apparatus as claimed in claim 9, **characterized in that** said preset delay module further comprises:
an amplifying unit for receiving the detected electrical leakage sampling signal, and outputting a third output signal after having amplified said electrical leakage sampling signal;
a delay unit, an input terminal of which is connected to an output terminal of said amplifying unit, and said delay unit outputs a fourth output signal in the case of receiving said third output signal, wherein, after the predetermined time delay started from the receipt of said third output signal, said fourth output signal reaches a second predetermined value;
a judging unit, which comprises two input terminals, wherein one input terminal is connected to the output terminal of said amplifying unit, and the other input terminal is connected to the output terminal of said delay unit, and when said judging unit receives said third output signal and the fourth output signal received by said judging unit reaches the second predetermined value, said judging unit outputs a fifth output signal which reaches the first predetermined value; and
a triggering unit, an input terminal of which is connected to an output terminal of said judging unit, and said triggering unit outputs, in the case of receiving said fifth output signal which reaches the first predetermined value, said triggering signal for triggering the action of the actuating mechanism in said residual current circuit-breaker.

11. The control apparatus as claimed in claim 10, **characterized in that** said delay unit comprises:
a first stage charge-discharge circuit, an input terminal of which is connected to the output terminal of said amplifying unit, wherein said first stage charge-discharge circuit completes its charging when receiving said third output signal and outputs a second intermediate signal, and discharges when the third output signal disappears and outputs the second intermediate signal until the discharging is completed;
a signal amplifying circuit, an input terminal of which is connected to an output terminal of said first stage charge-discharge circuit, for amplifying said received second intermediate signal and then outputting a third intermediate signal; and
a second stage charge-discharge circuit, an input terminal of which is connected to the output terminal of said signal amplifying circuit, and said second stage charge-discharge circuit charges when receiving said third intermediate signal and outputs the fourth output signal, wherein, after a predetermined time delay started from the receipt of said third output signal, said fourth output signal reaches the second predetermined value, and said predetermined time delay is determined by the charging time of said second stage charge-discharge circuit.

12. The control apparatus as claimed in claim 10 or 11, **characterized in that** said initiating unit is said amplifying unit, and the predetermined value of said initiating unit is a gate valve voltage of said amplifying unit.

13. The control apparatus as claimed in claim 11, **characterized in that** said second stage charge-discharge circuit discharges when said third intermediate signal disappears.

14. A method for controlling a residual current circuit breaker, comprising the following steps:
outputting by an inverse time-lag module a triggering signal for triggering the action of an actuating mechanism in said residual current circuit breaker when a detected electrical leakage sampling signal received by a preset delay module is less than a predetermined value of an initiating unit in the preset delay module, and after a period of inverse time-lag started from the receipt of the detected electrical leakage sampling signal; and
outputting by said preset delay module a triggering signal for triggering the action of the actuating mechanism in said residual current circuit breaker when the detected electrical leakage sampling signal received by said preset delay module is greater than or equal to the predetermined value of the initiating unit, and after a period of predetermined time delay started from the receipt of the detected electrical leakage sampling signal.

15. The control method as claimed in claim 14, **characterized in that** said inverse time-lag is determined by the charging time of a charge-discharge circuit.
